# EUROPÄISCHE PATENTSCHRIFT

(11) **EP 3 017 227 B1**
(45) Veröffentlichungstag und Bekanntmachung des Hinweises auf die Patenterteilung: **14.06.2017**
(21) Anmeldenummer: 14758818.0
(22) Anmeldetag: 21.08.2014
(51) Int. Cl.: F16L 19/025, F16L 51/00, F02C 7/22, F02C 9/40, F23K 5/14, F23R 3/28, F23R 3/36, F16L 19/02

(54) **ROHRVERBINDUNGSANORDNUNG, HOCHDRUCKFLUIDLEITUNGSSYSTEM EINER DOPPELBRENNSTOFFMASCHINE, DOPPELBRENNSTOFFMASCHINE UND VERWENDUNG EINER ZUGMUTTER**
DEVICE FOR CONNECTING PIPES, A HIGH PRESSURE FLUID CONDUIT SYSTEM OF A DUAL FUEL ENGINE, DUAL FUEL ENGINE AND USE OF A TIE NUT
AGENCEMENT DE LIAISON DE TUBE, SYSTÈME DE CONDUITES DE FLUIDE HAUTE PRESSION D'UN MOTEUR À COMBUSTION INTERNE DUALFUEL, MOTEUR À COMBUSTION INTERNE DUALFUEL ET UTILISATION D'UN ÉCROU DE SERRAGE

(30) Priorität: 20.09.2013 EP 13185330
(43) Veröffentlichungstag der Anmeldung: 11.05.2016
(73) Patentinhaber: Siemens Aktiengesellschaft, 80333 München (DE)
(72) Erfinder: BÖTTCHER, Andreas, 40822 Mettmann (DE); DÜMLER, Hartwig, 50996 Köln (DE); HESSE, Werner, 45271 Haltern am See (DE); LAPP, Patrick, 10367 Berlin (DE); NUDING, Joachim-Rene, 40885 Ratingen (DE); ROSENKRANZ, Josef, 52159 Rötgen (DE); STARING, Sascha, 47169 Duisburg (DE); XU, Changsheng, 45147 Essen (DE)
(86) Internationale Anmeldenummer: PCT/EP2014/067831
(87) Internationale Veröffentlichungsnummer: WO 2015/039832

(56) Entgegenhaltungen:
- EP-A2- 2 565 510
- DE-A1- 3 043 698
- DE-C1- 3 743 170
- DE-U1- 9 106 441
- US-A1- 2004 094 959
- US-A1- 2013 074 946

## Beschreibung

Die Erfindung betrifft eine Rohrverbindungsanordnung, welche in einem Hochdruckfluidleitungssystem einer Doppelbrennstoffmaschine angeordnet ist, umfassend ein erstes Rohrelement mit einem Außendichtkegel und einem hieran angrenzenden konischen Ansatz, umfassend ein weiteres Rohrelement mit einem Innendichtkegel und einem Außengewinde, umfassend ein Schraubmutterelement mit einem einen Innenspannkonus aufweisenden Spannhülsenbereich und einem ein Innengewinde aufweisenden Gewindehülsenbereich, bei welcher der Außendichtkegel des ersten Rohrelements zumindest teilweise in dem Innendichtkegel des weiteren Rohrelements angeordnet ist und bei welcher das Innengewinde des Schraubmutterelements auf dem Außengewinde des weiteren Rohrelements aufgeschraubt ist, so dass der Innenspannkonus des Schraubmutterelements gegen den konischen Ansatz des Rohrelements derart gezogen ist, dass der Außendichtkegel und der Innendichtkegel dichtend miteinander verspannt sind.

Die Erfindung betrifft darüber hinaus ein Hochdruckfluidleitungssystem mit einer Rohrverbindungsanordnung.

Die Erfindung betrifft des Weiteren eine Doppelbrennstoffmaschine mit einer Gasturbinde, welche an einem Hochdruckfluidleitungssystem angeschlossen ist, welches mindestens eine Rohrverbindungsanordnung aufweist.

Gattungsgemäße Rohrverbindungsanordnungen sind insbesondere im Zusammenhang mit Hochdruck-Gasleitungen bekannt, bei welchen Rohrleitungselemente durch eine Schraubverbindung untereinander oder mit Stutzenelementen einer Brennkraftmaschine, insbesondere einer Doppelbrennstoffmaschine, verbunden sind. Es hat sich gezeigt, dass diese Schraubverbindungen undicht werden können. Hierdurch können Brennstoffe, wie etwa Gas oder Öl, unkontrolliert aus einem entsprechenden Fluidleitungssystem, insbesondere aus einem Hochdruckfluidleitungssystem, austreten und Schäden verursachen.

Um die Gefahr eines derartigen unbeabsichtigten Lösens der Schraubverbindungen zu verhindern, wird ein Kegel-Klemmsystem verwendet, welches in die Überwurfmutter der Schraubverbindung integriert ist. Bei diesem Kegel-Klemmsystem sind die Enden der Rohrleitungselemente oder der Stutzenelemente konisch ausgestaltet. Zusätzlich werden die Überwurfmuttern der Schraubverbindungen mit einem Kontermuttersystem gesichert, um die Vorspannung in der Überwurfmutter zu erhöhen. Eine beispielhafte Beschreibung einer solchen Ausführungsform aus dem Stand der Technik findet sich etwa in dem deutschen Gebrauchsmuster DE 91 06 441 U1.

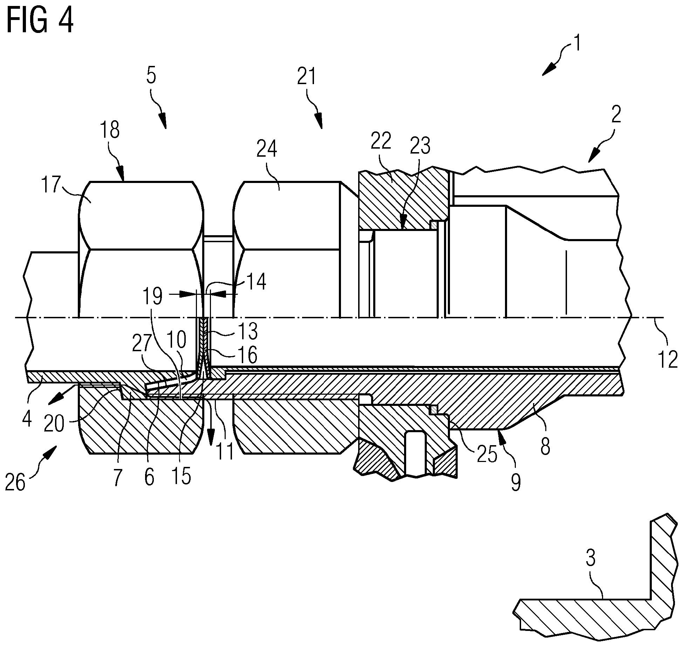

Darüber hinaus besteht oft das Problem, dass derartige Schraubverbindungen an nur schlecht zugänglichen Anlagenbereichen, beispielsweise an einem Brennerträgerflansch einer Gasturbinenanlage, liegen, der von außen äußerst schlecht erreichbar ist, wodurch die Gefahr erhöht ist, dass solche Schraubverbindungen nicht ordnungsgemäß angezogen werden. Eine aus dem Stand der Technik bekannte gattungsgemäße Rohrverbindungsanordnung 1 eines Hochdruckgasleitungssystems 2 einer eine Gasturbine (nicht gezeigt) umfassenden Doppelbrennstoffmaschine 3 ist in der Figur 4 gezeigt. Diese Rohrverbindungsanordnung 1 weist einerseits ein Rohrelement 4 mit einem Anschlussende 5 auf, welches einen Außendichtkegel 6 und einen konischen Ansatz 7 umfasst. Andererseits weist die Rohrverbindungsanordnung 1 ein weiteres Rohrelement 8 in Gestalt eines Stutzenelements 9 der Doppelbrennstoffmaschine 3 auf, welches endseitig einen Innendichtkegel 10 und ein Außengewinde 11 umfasst. Das Rohrelement 4 und das weitere Rohrelement 8 sind entlang einer Mittellängsachse 12 der Rohrverbindungsanordnung 1 ineinander eingesteckt, so dass der Außendichtkegel 6 des Rohrelements 4 an dem Innendichtkegel 10 formschlüssig anliegt. In dem weiteren Rohrelement 8 ist noch ein Innenrohrteil 13 eingelegt, wobei das Innenrohrteil 13 von dem ersten Rohrelement 4 mit einem Abstand 14 beabstandet ist, so dass dort ein Spalt 15 besteht. In dem Spalt 15 ist ein Dichtungselement 16 eingebracht. Die beiden Rohrelemente 4 und 8 der Rohrverbindungsanordnung 1 sind mittels eines Schraubmutterelements 17 in Gestalt einer Überwurfmutter 18 in Richtung der Mittellängsachse 12 miteinander verspannt. Hierzu ist die Überwurfmutter 18 auf das erste Rohrelement 4 aufgeschoben und mit ihrem Innengewinde 19 auf das Außengewinde 11 des weiteren Rohrelements 8 aufgeschraubt. Hierbei kommt ein Innenspannkonus 20 der Überwurfmutter 18 mit dem konischen Ansatz 7 des ersten Rohrelements 4 in Wirkkontakt. Je weiter die Überwurfmutter 18 auf das weitere Rohrelement 8 aufgeschraubt wird, desto weiter wird das erste Rohrelement 4 von dem Innenspannkonus 20 der Überwurfmutter 18 in Richtung des weiteren Rohrelements 8 mitgeschleppt, bis letztendlich der Außendichtkegel 6 des ersten Rohrelements 4 mit dem Innendichtkegel 8 des weiteren Rohrelements 8 mit der gewünschten Vorspannkraft miteinander verspannt sind. Die Rohrverbindungsanordnung 1 ist darüber hinaus mit einer Schott-Verschraubung 21 an einem Brennerträgerflansch 22 festgelegt, wobei das weitere Rohrelement 8 durch eine in dem Brennerträgerflansch 22 vorhandenen Bohrung 23 durchgeführt ist. Die Schott-Verschraubung 21 umfasst eine Mutter 24, welche ebenfalls auf das Außengewinde 11 des weiteren Rohrelements 8 aufgeschraubt ist. Das weitere Rohrelement 8 besitzt einen Ansatz 25, gegen welchen der Brennerträgerflansch 22 mithilfe der Mutter 24 verklemmt ist. Die in der Figur 4 gezeigte und aus dem Stand der Technik bekannte Rohrverbindungsanordnung 1 ist somit als Kegel-Klemmsystem 26 mit Schraubverbindung (Überwurfmutter) ausgeführt, wobei aufgrund der durch die Überwurfmutter 18 in die Rohrverbindungsanordnung 1 eingebrachten Vorspannkraft eine gute Dichtigkeit erzielt werden kann.

Im Allgemeinen bleiben die Bauteile derartiger Schraubverbindungen solange fest und dementsprechend auch dicht miteinander verbunden, solange das Kegel-Klemmsystem 26, insbesondere dessen Außendichtkegel 6 und Innendichtkegel 10, und die Überwurfmutter 18 in etwa die gleiche Temperatur besitzen. Dies ist insbesondere dann der Fall, wenn eine entsprechende Anlage im stationären Betrieb gefahren wird.

Insbesondere an Doppelbrennstoffmaschinen 3 können jedoch kurzzeitig größere Temperaturschwankungen auftreten, wenn ein Brennstoffwechsel, also eine Umschaltung zwischen Öl- und Gasversorgung, vorgenommen wird. Dadurch, dass kurzzeitig transient kaltes Gas durch eine gattungsgemäße Rohrverbindungsanordnung einer Brennstoffleitung eingeleitet wird, kann das Kegel-Klemmsystem 26, insbesondere dessen Außendichtkegel 6 und Innendichtkegel 10, kritisch abkühlen und sich derart zusammenziehen, dass die Vorspannung der noch wärmeren Überwurfmutter 18 nicht genügend hoch ist, um den Außendichtkegel 6 und den Innendichtkegel 10 axial ausreichend dichtend verpresst zu halten. Die Schraubverbindung wird schlichtweg gelockert und es kommt zu Undichtigkeiten 27. In Kombination mit den Vibrationen der Anlage, beispielsweise aufgrund einer unruhigeren Verbrennung, kann sich die Rohrverbindungsanordnung 1 weiter losrütteln, so dass sie selbst dann noch undicht ist, wenn an ihr wieder gleichmäßige Temperaturbedingungen vorherrschen.

Es ist Aufgabe der Erfindung, gattungsgemäße Rohrverbindungsanordnung weiterzuentwickeln, um zumindest die vorstehend genannten Nachteile zu überwinden.

Die Aufgabe der Erfindung wird von einer Rohrverbindungsanordnung, welche in einem Hochdruckfluidleitungssystem einer Doppelbrennstoffmaschine angeordnet ist, umfassend ein erstes Rohrelement mit einem Außendichtkegel und einem hieran angrenzenden konischen Ansatz, umfassend ein weiteres Rohrelement mit einem Innendichtkegel und einem Außengewinde, umfassend ein Schraubmutterelement mit einem einen Innenspannkonus aufweisenden Spannhülsenbereich und einem ein Innengewinde aufweisenden Gewindehülsenbereich gelöst, bei welcher der Außendichtkegel des ersten Rohrelements zumindest teilweise in dem Innendichtkegel des weiteren Rohrelements angeordnet ist und bei welcher das Innengewinde des Schraubmutterelements auf dem Außengewinde des weiteren Rohrelements aufgeschraubt ist, so dass der Innenspannkonus des Schraubmutterelements gegen den konischen Ansatz des Rohrelements derart gezogen ist, dass der Außendichtkegel und der Innendichtkegel dichtend miteinander verspannt sind, wobei der Gewindehülsenbereich des Schraubmutterelements konisch ausgestaltet ist.

Vorteilhafterweise ist durch den konisch ausgestalteten Gewindehülsenbereich die Schraubverbindung an der Rohrverbindungsanordnung wesentlich elastischer gestaltet, wodurch eine außergewöhnlich gute Vorspannung an der Rohrverbindungsanordnung erzielt werden kann. Damit unterscheidet sich die erfindungsgemäße Schraubverbindung von den aus dem Stand der Technik bekannten Schraubverbindungen, insbesondere von der in dem deutschen Gebrauchsmuster DE 91 06 441 beschriebenen Schraubverbindung.

Die konische Form des vorliegenden Schraubmutterelements sorgt durch die federnde Wirkung immer dafür, dass beim Zusammenziehen des Kegel-Klemmsystems die Pressung des Dichtsitzes immer erhalten bleibt. Die bei der Montage erzeugte Vorspannung bleibt also auch bei unterschiedlicher Wärmedehnung erhalten.

Das vorliegende Schraubmutterelement zeichnet sich einerseits durch den Gewindehülsenbereich und andererseits durch den Spannhülsenbereich aus, welche in Längserstreckung der Rohrverbindungsanordnung, also in Richtung der Mittellängsachse der Rohrverbindungsanordnung, nebeneinander angeordnet sind. Im Gegensatz zu dem Gewindehülsenbereich ist an dem Spannhülsenbereich kein Innengewinde sondern der Innenspannkonus vorgesehen, an welchem sich der konische Ansatz des ersten Rohrelements abstützt.

Somit ist es vorteilhaft, wenn das vorliegende Schraubmutterelement als Zugmutter ausgebildet ist, da einer Zugmutter gute elastische Eigenschaften innewohnen.

Deshalb wird die Aufgabe der Erfindung auch von einer Verwendung einer Zugmutter an einer Rohrverbindungsanordnung eines Hochdruckfluidleitungssystems einer Doppelbrennstoffmaschine zum Erhalten einer hinreichenden Vorspannkraft einer Schraubverbindung der Rohrverbindungsanordnung gelöst.

Durch die Verwendung einer Zugmutter ist die Gefahr signifikant reduziert, dass sich die Schraubverbindung unbeabsichtigt lockert, wenn sich an der Rohrverbindungsanordnung von außen nach innen kurzzeitig ein höherer Temperaturgradient einstellt. Dies kann insbesondere bei einem Brennstoffwechsel an einem Hochdruckfluidleitungssystem einer Doppelbrennstoffmaschine vorkommen.

Das vorgeschlagene Schraubmutterelement bietet auch den Vorteil, schnelle Änderungen der Belastungen, sogenannte Wechselbeanspruchen und Laststöße durch die nun mögliche Dehnung zu mildern.

Insofern wird die Aufgabe der Erfindung auch von einem Hochdruckfluidleitungssystem mit einer Rohrverbindungsanordnung gelöst, wobei das Hochdruckfluidleitungssystem eine Rohrverbindungsanordnung nach einem der beschriebenen Merkmale umfasst.

Durch den Einsatz der vorliegenden Rohrverbindungsanordnung ist das Hochdruckfluidleitungssystem im Hinblick auf Temperaturänderungen bzw. -schwankungen wesentlich weniger anfällig, wodurch die Gefahr eines unbeabsichtigten Lösens einer Schraubverbindung insbesondere auch an Doppelbrennstoffmaschinen reduziert ist.

Auch aus diesen Gründen wird die Aufgabe der Erfindung ebenfalls von einer Doppelbrennstoffmaschine mit einer Gasturbine gelöst, welche an einem Hochdruckfluidleitungssystem angeschlossen ist, welches mindestens eine Rohrverbindungsanordnung aufweist, wobei die Doppelbrennstoffmaschine eine Rohrverbindungsanordnung oder ein Hochdruckfluidleitungssystem nach einem der hier beschriebenen Merkmale umfasst.

Das Schraubmutterelement kann konstruktiv einfach mit den sehr guten elastischen Eigenschaften hergestellt werden, wenn der Gewindehülsenbereich eine konische Außenkontur aufweist.

Vorteilhafte axiale Dehneigenschaften des Schraubmutterelements in Richtung der Mittellängsachse der Rohrverbindungsanordnung können erzielt werden, wenn der Gewindehülsenbereich einen in Längserstreckung des Schraubmutterelements veränderlichen Wandungsquerschnitt aufweist.

Eine besonders vorteilhafte Ausführungsvariante sieht vor, dass der Gewindehülsenbereich und das Außengewinde des weiteren Rohrelements derart ausgestaltet sind und miteinander in Wirkverbindung stehen, dass der Gewindehülsenbereich und ein das Außengewinde umfassender Endbereich des weiteren Rohrelements gleichsinnig verformbar sind.

Sind der Gewindehülsenbereich und das hiermit korrespondierende Außengewinde, insbesondere in Abhängigkeit von der Temperatur, gleichsinnig verformbar, kann zuverlässig gewährleistet werden, dass sich unabhängig von den vorherrschenden Temperaturverhältnissen immer mehrere Gewindegänge miteinander in Eingriff befinden. Dies ist bei bisherigen aus dem Stand der Technik bekannten Rohrverbindungsanordnungen häufig nicht der Fall, wodurch diese Rohrverbindungsanordnungen bei Temperaturschwankungen Undichtigkeiten aufweisen können.

Darüber hinaus ist es vorteilhaft, wenn der Gewindehülsenbereich ein um mehr als 20% oder um mehr als 40% vergrößertes axiales Verformungsvermögen aufweist als Gewindehülsenbereiche von Schraubmutterelementen an gattungsgemäßen Rohrverbindungsanordnungen.

Die radiale und axiale Federung des Schraubmutterelements wird vorliegend durch die kegelförmige Gestaltung des im Gewindehülsenbereich vorwiegend durch Tangentialspannung belasteten Schraubmutterelements erhöht. Mit dem konisch ausgestalteten Gewindehülsenbereich kann der axiale Verformungsweg mindestens um 43% erhöht werden. Damit wäre bereits eine Temperaturerhöhung bzw. ein Temperaturgradient von ca. 300 °K erforderlich, um die Vorspannung der erfindungsgemäßen Rohrverbindungsanordnung auf Null zu reduzieren.

Entsprechendes gilt für die Toleranz gegenüber Setzbeträgen.

Insbesondere ist das axiale Verformungsvermögen des Gewindehülsenbereichs mindestens mehr als doppelt so hoch wie das axiale Verformungsvermögen des Spannhülsenbereichs des Schraubmutterelements.

Die Rohrverbindungsanordnung kann stabiler insbesondere in einem Hochdruckfluidleitungssystem gehaltert werden, wenn sie mit einer Schottverschraubung an einem Gehäusebauteil oder dergleichen festgelegt ist.

Insofern ist es vorteilhaft, wenn das weitere Rohrelement einen Gewindeabsatz eines Schottverschraubungsgewindes aufweist, welches axial neben dem Außengewinde angeordnet ist.

Idealerweise können für das Schraubmutterelement und die Mutter der Schottverbindung das gleiche Außengewinde verwendet werden.

Die vorliegende Rohrverbindungsanordnung kann besonders vorteilhaft ausgeführt werden, wenn das weitere Rohrelement ein Vormischgas-Rohrelement oder ein Brennkraftmaschinen seitiges Stutzenelement ist.

Zudem kann die Rohrverbindungsanordnung ohne zusätzliche Verdrehsicherung auskommen, sie ist somit selbstsichernd.

Darüber hinaus bietet die erfindungsgemäße Rohrverbindungsanordnung, dass nicht nur ein Gewindegang die Vorspannungslast trägt, sondern eine deutlich gleichmäßigere Verteilung an der Schraubverbindung erzielt werden kann. Zudem kann eine elastische Verspannung mit Übergangsbereichen, also nicht nur die Zustände "fest/lose" erzielt werden. Ferner können herkömmliche Kegel-Klemmsysteme erhalten bleiben. Des Weiteren werden keine weiteren Sicherungsmaßnahmen benötigt. Darüber hinaus kann ein zwei dimensionales Tragverhalten und eine gleichmäßigere Lastverteilung im Gewinde erzielt werden. Auch bietet die erfindungsgemäße Rohrverbindungsanordnung eine einfache Konstruktion, eine einfache Herstellung, einen einfachen Einbau und demzufolge auch eine sehr preiswerte Lösung.

Im Folgenden wird eine bevorzugte Ausführungsform der erfindungsgemäßen Rohrverbindungsanordnung anhand der beigefügten schematischen Zeichnungen erläutert. Es zeigt:
- FIG 1: schematisch eine perspektivische Ansicht einer Rohrverbindungsanordnung mit einem als Zugmutter ausgebildeten Schraubmutterelement umfassend einen konisch ausgestalten Gewindehülsenbereich,
- FIG 2: schematisch eine Längsschnittansicht der Rohrverbindungsanordnung aus der FIG 1,
- FIG 3: schematisch eine teilweise Detailansicht der Zugmutter aus den FIG 1 und 2, und
- FIG 4: eine aus dem Stand der Technik bekannte gattungsgemäße Rohrverbindungsanordnung eines Hochdruckgasleitungssystems einer Gasturbine.

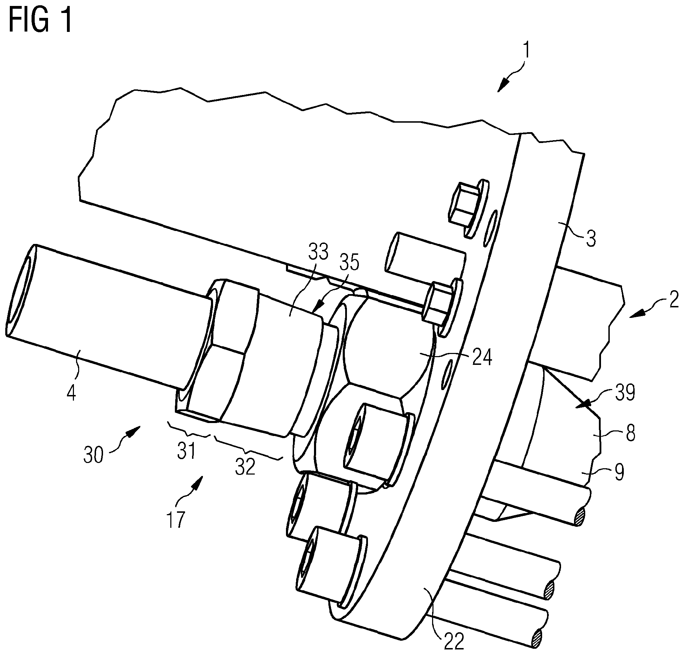

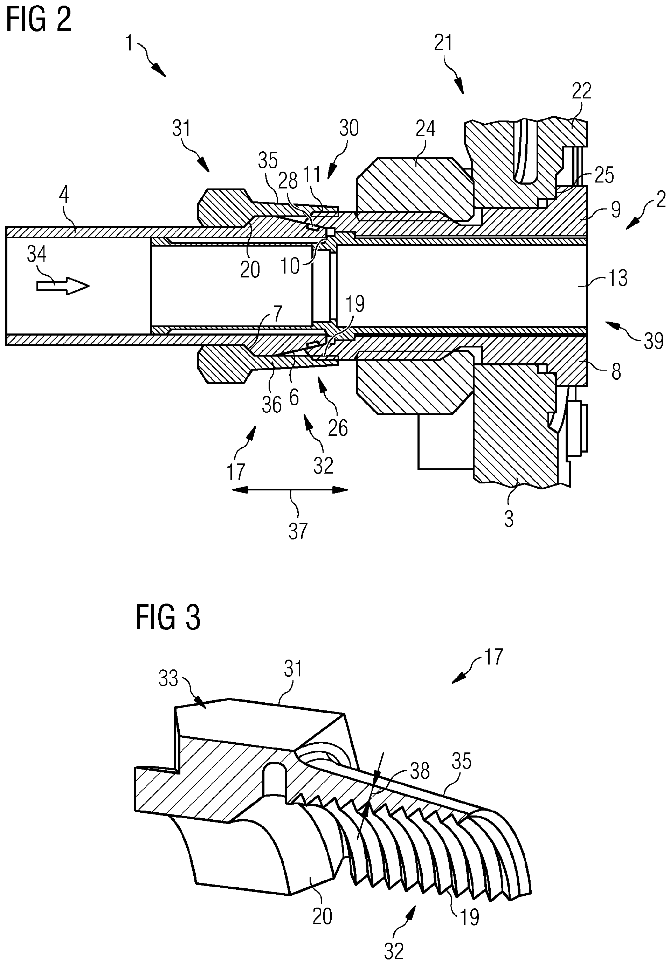

Die in den Figuren 1 und 2 gezeigte Rohrverbindungsanordnung 1 ist in einem Hochdruckfluidleitungssystem 2 einer Doppelbrennstoffmaschine 3 eingebunden.

Die Rohrverbindungsanordnung 1 besteht im Wesentlichen aus einem ersten Rohrelement 4, aus einem weiteren Rohrelement 8 und einem Schraubmutterelement 17, um die beiden Rohrelemente 4 und 8 mittels einer Schraubverbindung 30 fest und dichtend miteinander zu verbinden.

Wie gut nach der Darstellung gemäß der Figur 2 zu erkennen ist, weist das erste Rohrelement 4 einen Außendichtkegel 6 und einen konischen Ansatz 7 auf. Das weitere Rohrelement 8 weist einen Innendichtkegel 10 und ein Außengewinde 11 auf. Und das Schraubmutterelement 17 zeichnet sich durch einen einen Innenspannkonus 20 aufweisenden Spannhülsenbereich 31 und durch einen ein Innengewinde 19 aufweisenden Gewindehülsenbereich 32 aus.

Der Außendichtkegel 6 des ersten Rohrelements 4 ist hierbei zumindest teilweise in den Innendichtkegel 10 des weiteren Rohrelements 8 eingesteckt. Darüber hinaus ist das Innengewinde 19 des Schraubmutterelements 17 auf das Außengewinde 11 des weiteren Rohrelements 8 aufgeschraubt, wodurch der Innenspannkonus 20 des Schraubmutterelements 17 gegen den konischen Ansatz 7 des ersten Rohrelements 4 derart gezogen ist, dass der Außendichtkegel 6 und der Innendichtkegel 10 dichtend miteinander verspannt sind, so dass hierdurch ein Kegel-Klemmsystem 26 bereitgestellt ist. An dem Außendichtkegel 6 ist noch eine umlaufende Nut 28 eingestochen, in welcher ein Weichdichtelement (hier nicht gezeigt) eingelegt werden kann, um die Dichtigkeit des Kegel-Klemmsystems 26 zu verbessern. Insofern kann auf ein Dichtungsmittel zwischen dem ersten Rohrelement 4 und einem in das weitere Rohrelement 8 eingelegten Innenrohrteil 13 verzichtet werden.

Der Gewindehülsenbereich 32 des Schraubmutterelements 17 ist erfindungsgemäß konisch ausgestaltet, um so bezüglich des vorstehend erläuterten Kegel-Klemmsystems 26 eine Schraubverbindung 30 mit einer immer ausreichend hohen Vorspannung in der Rohrverbindungsanordnung 1 bereitzustellen.

Insofern stellt das Schraubmutterelement 17 im Sinne der Erfindung insbesondere eine Zugmutter 33 dar, welche durch den speziell ausgebildeten Gewindehülsenbereich 32 eine immer ausreichend hohe Vorspannung an der Rohrverbindungsanordnung 1 erzeugen kann, selbst dann noch, wenn sich das Kegel-Klemmsystem 26 aufgrund einer Abkühlung durch ein in die Rohrelemente 4 und 8 eingeleitetes transient kaltes Gas 34 stark zusammenzieht, aber das Schraubmutterelement 17 kurzfristig nicht ebenfalls so stark abkühlt.

Hierbei hat der Gewindehülsenbereich 32 des Schraubmutterelements 17 eine konische Außenkontur 35, wodurch die Wandung 36 des Schraubmutterelements 17 an diesem Gewindehülsenbereich 32 sehr elastisch und dehnbar ist.

Es ist nach der Darstellung gemäß den Figuren 2 und 3 gut zu erkennen, dass der Gewindehülsenbereich 32 einen in Längserstreckung 37 des Schraubmutterelements 17 veränderlichen Wandungsquerschnitt 38 aufweist.

In diesem Ausführungsbeispiel ist das weitere Rohrelement 8 ein Vormischgas-Rohrelement 39, welches als Stutzenelement 9 der Doppelbrennstoffmaschine 3 ausgebildet ist.

Das weitere Rohrelement 8 ist mit einer Schott-Verschraubung 21 an einem Brennerträgerflansch 22 der Doppelbrennstoffmaschine 3 festgelegt. Hierzu ist eine weitere Mutter 24 auf das Außengewinde 11 aufgeschraubt, die letztendlich den Brennerträgerflansch 22 gegen einen Ansatz 25 des weiteren Rohrelements 8 festlegt.

Nach der Darstellung gemäß der Figur 3 ist das Schraubmutterelement 17 nochmals teilweise im Detail gezeigt, wobei gut zu erkennen ist, wie sich an dem massiveren Spannhülsenbereich 31 das wesentlich schmalere und zudem konische Gewindehülsenteil 32 anschließt.

## Patentansprüche

1. Rohrverbindungsanordnung (1) für ein Hochdruckfluidleitungssystem (2) einer Doppelbrennstoffmaschine (3), umfassend ein erstes Rohrelement (4) mit einem Außendichtkegel (6) und einem hieran angrenzenden konischen Ansatz (7),
umfassend ein weiteres Rohrelement (8) mit einem Innendichtkegel (10) und einem Außengewinde (11),
umfassend ein Schraubmutterelement (17) mit einem einen Innenspannkonus (20) aufweisenden Spannhülsenbereich (31) und einem ein Innengewinde (19) aufweisenden Gewindehülsenbereich (32), bei welcher der Außendichtkegel (6) des ersten Rohrelements (4) zumindest teilweise in dem Innendichtkegel (10) des weiteren Rohrelements (8) angeordnet ist und bei welcher das Innengewinde (19) des Schraubmutterelements (17) auf dem Außengewinde (11) des weiteren Rohrelements (8) aufgeschraubt ist, so dass der Innenspannkonus (20) des Schraubmutterelements (17) gegen den konischen Ansatz (7) des ersten Rohrelements (4) derart gezogen ist, dass der Außendichtkegel (6) und der Innendichtkegel (10) dichtend miteinander verspannt sind,
wobei der Gewindehülsenbereich (32) des Schraubmutterelements (17) konisch ausgestaltet ist.

2. Rohrverbindungsanordnung (1) gemäß Anspruch 1,
wobei der Gewindehülsenbereich (32) eine konische Außenkontur (35) aufweist.

3. Rohrverbindungsanordnung (1) gemäß Anspruch 1 oder 2,
wobei der Gewindehülsenbereich (32) einen in Längserstreckung (37) des Schraubmutterelements (17) veränderlichen Wandungsquerschnitt (38) aufweist.

4. Rohrverbindungsanordnung (1) gemäß einem der Ansprüche 1 bis 3,
wobei der Gewindehülsenbereich (32) und das Außengewinde (11) des weiteren Rohrelements (8) derart ausgestaltet sind und miteinander in Wirkverbindung stehen, dass der Gewindehülsenbereich (32) und ein das Außengewinde (11) umfassender Endbereich des weiteren Rohrelements (8) gleichsinnig verformbar sind.

5. Rohrverbindungsanordnung (1) gemäß einem der Ansprüche 1 bis 4,
wobei das weitere Rohrelement (8) ein Vormischgas-Rohrelement (39) oder ein Brennkraftmaschinen seitiges Stutzenelement (9) ist.

6. Hochdruckfluidleitungssystem (2) mit einer Rohrverbindungsanordnung (1),
wobei das Hochdruckfluidleitungssystem (2) eine Rohrverbindungsanordnung (1) nach einem der vorstehenden Ansprüche umfasst.

7. Doppelbrennstoffmaschine (3) mit einer Gasturbine, welche an einem Hochdruckfluidleitungssystem (2) angeschlossen ist, welches mindestens eine Rohrverbindungsanordnung (1) aufweist,
wobei die Doppelbrennstoffmaschine (3) eine Rohrverbindungsanordnung (1) oder ein Hochdruckfluidleitungssystem (2) nach einem der vorstehenden Ansprüche umfasst.

8. Verwendung einer Zugmutter (33) an einer Rohrverbindungsanordnung (1) eines Hochdruckfluidleitungssystems (2) einer Doppelbrennstoffmaschine (3) zum Erhalten einer hinreichenden Vorspannkraft einer Schraubverbindung (30) der Rohrverbindungsanordnung (1), wobei die Zugmutter (33) als Schraubmutterelement (17) mit einem einen Innenspannkonus (20) aufweisenden Spannhülsenbereich (31) und einem ein Innengewinde (19) aufweisenden Gewindehülsenbereich (32) ausgebildet ist, und wobei der Gewindehülsenbereich (32) des Schraubmutterelements (17) konisch ausgestaltet ist.

## Claims

1. Pipe connection arrangement (1) for a high-pressure fluid line system (2) of a dual fuel engine (3), comprising a first pipe element (4) having an outer sealing cone (6) and having a conical shoulder (7) adjoining said cone,
comprising a further pipe element (8) having an inner sealing cone (10) and an external thread (11),
comprising a screw nut element (17) having a clamping sleeve region (31) that has an inner clamping cone (20) and having a threaded sleeve region (32) that has an internal thread (19), in which the outer sealing cone (6) of the first pipe element (4) is arranged at least partially in the inner sealing cone (10) of the further pipe element (8) and in which the internal thread (19) of the screw nut element (17) is screwed on the external thread (11) of the further pipe element (8), with the result that the inner clamping cone (20) of the screw nut element (17) is pulled against the conical shoulder (7) of the first pipe element (4) in such a way that the outer sealing cone (6) and the inner sealing cone (10) are clamped to one another in a sealing manner,
wherein the threaded sleeve region (32) of the screw nut element (17) is of conical configuration.

2. Pipe connection arrangement (1) according to Claim 1, wherein the threaded sleeve region (33) has a conical outer contour (35).

3. Pipe connection arrangement (1) according to Claim 1 or 2, wherein the threaded sleeve region (33) has a variable wall cross section (38) in the longitudinal direction (37) of the screw nut element (17).

4. Pipe connection arrangement (1) according to one of Claims 1 to 3,
wherein the threaded sleeve region (33) and the external thread (11) of the further pipe element (8) are configured and are in operative connection with one another in such a way that the threaded sleeve region (33) and an end region of the further pipe element (8), said end region comprising the external thread (11), can be deformed in the same sense.

5. Pipe connection arrangement (1) according to one of Claims 1 to 4,
wherein the further pipe element (8) is a pre-mixing gas pipe element (39) or a connection stub element (9) on the combustion engine.

6. High-pressure fluid line system (2) having a pipe connection arrangement (1),
wherein the high-pressure fluid line system (2) comprises a pipe connection arrangement (1) according to one of the preceding claims.

7. Dual fuel engine (3) having a gas turbine, which is connected to a high-pressure fluid line system (2) that has at least one pipe connection arrangement (1),
wherein the dual fuel engine (3) comprises a pipe connection arrangement (1) or a high-pressure fluid line system (2) according to one of the preceding claims.

8. Use of a tension nut (33) on a pipe connection arrangement (1) of a high-pressure fluid line system (2) of a dual fuel engine (3) to obtain a sufficient preloading force of a screwed joint (30) of the pipe connection arrangement (1), wherein the tension nut (33) is designed as a screw nut element (17) having a clamping sleeve region (31) that has an inner clamping cone (20) and having a threaded sleeve region (32) that has an internal thread (19), and wherein the threaded sleeve region (32) of the screw nut element (17) is of conical configuration.

## Revendications

1. Agencement ( 1 ) de liaison de tuyau pour un système ( 2 ) de conduites de fluide sous haute pression d'une machine ( 3 ) à combustible double, comprenant un premier élément ( 4 ) de tuyau, ayant un cône ( 6 ) d'étanchéité extérieur et un épaulement ( 7 ), qui en est voisin,
comprenant un autre élément ( 8 ) de tuyau, ayant un cône ( 10 ) d'étanchéité intérieur et un filetage ( 11°), comprenant un élément ( 17 ) d'écrou, ayant une partie ( 31 ) de douille de serrage, comportant un cône ( 20 ) de serrage intérieur, et une partie ( 32 ) de douille filetée, comportant un taraudage ( 19 ), le cône ( 6 ) d'étanchéité extérieur du premier élément ( 4 ) de tuyau étant disposé, au moins en partie, dans le cône ( 10 ) d'étanchéité intérieur de l'autre élément ( 8 ) de tuyau et le taraudage ( 19 ) de l'élément ( 17 ) d'écrou étant vissé sur le filetage ( 11 ) de l'autre élément ( 8 ) de tuyau, de manière à ce que le cône ( 20 ) de serrage intérieur de l'élément ( 17 ) d'écrou soit tiré sur l'épaulement ( 7 ) conique du premier élément ( 4 ) de tuyau, de façon à serrer le cône ( 6 ) d'étanchéité extérieur et le cône ( 10 ) d'étanchéité intérieur, l'un à l'autre, d'une manière étanche,
dans lequel la partie ( 32 ) de douille filetée de l'élément ( 17 ) d'écrou est conique.

2. Agencement ( 1 ) de liaison de tuyau suivant la revendication 1,
dans lequel la partie ( 32 ) de douille filetée a un contour ( 35 ) extérieur conique.

3. Agencement ( 1 ) de liaison de tuyau suivant la revendication 1 ou 2,
dans lequel la partie ( 32 ) de douille filetée a une section ( 38 ) transversale de paroi se modifiant dans l'étendue ( 37 ) longitudinale de l'élément ( 17 ) d'écrou.

4. Agencement ( 1 ) de liaison de tuyau suivant l'une des revendications 1 à 3,
dans lequel la partie ( 32 ) de douille filetée et le filetage ( 11 ) de l'autre élément ( 8 ) de tuyau sont conformés et sont en liaison d'action entre eux, de manière à ce que la partie ( 32 ) de douille filetée et une partie d'extrémité, comprenant le filetage ( 11 ) de l'autre élément ( 8 ) de tuyau, puissent être déformées dans le même sens.

5. Agencement ( 1 ) de liaison de tuyau suivant l'une des revendications 1 à 4,
dans lequel l'autre élément ( 8 ) de tuyau est un élément ( 39 ) de tuyau de gaz de pré-mélange, ou un élément ( 9 ) de conduit du côté du moteur à combustion interne.

6. Système ( 2 ) de conduites de fluide sous haute pression ayant un agencement ( 1 ) de tuyau,
dans lequel le système ( 2 ) de conduites de fluide sous haute pression comprend un agencement ( 1 ) de tuyau suivant l'une des revendications précédentes.

7. Machine ( 3 ) à deux combustibles, comprenant une turbine à gaz raccordée à un système ( 2 ) de conduites de fluide sous haute pression, qui a au moins un agencement ( 1 ) de liaison de tuyau,
la machine ( 3 ) à deux combustibles comprenant un agencement ( 1 ) de liaison de tuyau ou un système ( 2 ) de conduites de fluide sous haute pression suivant l'une des revendications précédentes.

8. Utilisation d'un écrou ( 33 ) de traction sur un agencement ( 1 ) de liaison de tuyau d'un système ( 2 ) de conduites de fluide sous haute pression d'une machine ( 3 ) à deux combustibles, pour obtenir une force de précontrainte suffisante d'un vissage ( 30 ) de l'agencement ( 1 ) de liaison de tuyau, l'écrou ( 33 ) de traction étant conformé sous la forme d'un élément ( 17 ) d'écrou, ayant une partie ( 31 ) de douille de serrage, comportant un cône ( 20 ) de serrage intérieur, et une partie ( 32 ) de douille filetée, comportant un taraudage ( 19 ), la partie ( 32 ) de douille filetée de l'élément ( 17 ) d'écrou étant conique.
